# EUROPEAN PATENT APPLICATION

(11) **EP 1 124 381 A1**
(43) Date of publication of application: **16.08.2001**
(21) Application number: 00250038.7
(22) Date of filing: 08.02.2000
(51) Int. Cl.: H04N 7/50, G11B 27/034

(54) **Method and apparatus for bitrate control in a video or audio encoder**

(71) Applicant: DEUTSCHE THOMSON-BRANDT GMBH, 78048 Villingen-Schwenningen (DE)
(72) Inventor: Gaedke, Klaus, 30659 Hannover (DE); Schiller, Harald, 30539 Hannover (DE); Ostermann, Ralf, 30451 Hannover (DE); Peters, Hartmut, 30890 Barsinghausen (DE); Schütze, Herbert, 29227 Celle (DE)
(74) Representative: Hartnack, Wolfgang, Dipl.-Ing.

(57) **Abstract**

The output bitrate of an MPEG-2 video encoder depends on the source data rate, the content or detail or degree of motion in the source pictures, the prediction type and on quantiser settings. The control of the encoder output bitrate is based on the filling level of a buffer containing VLC words. Corresponding to the actual filling level of this VLC buffer the quantiser settings are adapted in order to achieve a constant-bitrate encoder output. DVD-RAM devices are now on the market that are capable of storing such MPEG-2 video encoded video sequences. The bitrate control algorithm used has a severe impact on the achievable visual picture quality of the encoded video sequence. Therefore the current filling levels of two further buffers in the processing chain are additionally taken into account for the bitrate control: for the application with DVD-RAM, the mechanical buffer of a DVD recorder and the therein loaded DVD-RAM disc itself. The bitrate control scheme is mainly applied to the quantiser settings or characteristics.

## Description

The invention relates to a method and to an apparatus for bitrate control in a video or audio encoder.

### Background

The output bitrate of an MPEG-2 video encoder depends on the source data rate, the content or detail or degree of motion in the source pictures, the prediction type and on quantiser settings. The control of the encoder output bitrate is based on the filling level of a buffer containing VLC (variable-length coded) words, this buffer being arranged near the output of the encoder. Corresponding to the actual filling level of this VLC buffer the quantiser settings or characteristics are changed or adapted in order to achieve an encoder output bitrate fulfilling the application requirements.
DVD-RAM (digital versatile disc) devices are now on the market that are capable of storing such MPEG-2 video encoded video sequences.

### Invention

The bitrate control algorithm used has a severe impact on the achievable visual picture quality of the encoded video sequence. Insufficient behaviour of the bitrate control is often responsible for degradation of the visual quality of the encoded pictures. A corresponding finding is true for audio encoding.
It is one object of the invention to disclose a method for enhanced bitrate control, in particular for encoding video or audio data that are subsequently stored on a storage medium. This object is achieved by the method disclosed in claim 1.

It is a further object of the invention to disclose an apparatus, which utilises the inventive method. This object is achieved by the apparatus disclosed in claim 6.

The inventive bitrate control scheme is suited for storing encoded audio data or e.g. MPEG-2 encoded video data on storage media like DVD-RAMs. The current filling levels of two further buffers in the processing chain are additionally taken into account for the bitrate control: for the application with DVD-RAM, the mechanical buffer of a DVD recorder and the therein loaded DVD-RAM disc itself.
The inventive bitrate control scheme is mainly applied to the above mentioned quantiser settings or characteristics. In addition or as an alternative it is also possible to correspondingly adapt, depending on one or more of said buffer filling levels, the kind of prediction applied and/or the VLC encoding by e.g. selecting different VLC encoding schemes like different Huffman tables according to the current picture statistics.
In case of encoding audio signals, basically the bit allocation to spectral coefficients is controlled. Additionally or alternatively, the kind of scale factor coding in MPEG-1 or MPEG-2 layer 1 or layer 2 audio or the mantissa wordlength in AC-3 or the wordlength in MD can be controlled. In all kind of audio encoding the masking thresholds or transmission of frequency band content can be controlled.

A significant advantage of the invention is that not only the encoder requirements are taken into account during encoding but also additional requirements, which allow e.g. improved picture-decoding quality when replaying the storage medium. Such additional requirements are e.g. the storage capacity of the recorder input buffer, the necessary data format on the storage medium, and the amount of different types of data streams like video, audio and user data to be recorded.

In principle, the inventive method is suited for bitrate control in a video or audio encoder with an encoded-data buffer, wherein a first control signal representing the current filling level of said encoded-data buffer is used to control the video or audio encoder output bitrate by corresponding adaptation of at least one encoding parameter used in said video or audio encoder, and wherein the encoded output video or audio data pass through said encoded-data buffer and an input buffer of a data recorder and are thereafter stored on a storage medium operated in said data recorder, wherein said encoding parameter and/or further encoding parameters influencing said video or audio encoder output bitrate are additionally controlled by a second control signal representing the current filling level of said input buffer and/or by a third control signal representing a currently available storage capacity on said storage medium.

Advantageous additional embodiments of the inventive method are disclosed in the respective dependent claims.

In principle the inventive apparatus is suited for bitrate control and includes:
- a video or audio encoder to which an encoded-data buffer is assigned;
- a data recorder including an input buffer, wherein output video or audio data of said encoded-data buffer pass through said input buffer and are thereafter stored on a storage medium operated in said data recorder, and wherein a first control signal representing the current filling level of said encoded-data buffer is used to control the video or audio encoder output bitrate by corresponding adaptation of at least one encoding parameter used in said video or audio encoder, wherein said encoding parameter and/or further encoding parameters influencing said video or audio encoder output bitrate are additionally controlled by a second control signal representing the current filling level of said input buffer and/or by a third control signal representing a currently available storage capacity on said storage medium.

Advantageous additional embodiments of the inventive apparatus are disclosed in the respective dependent claims.

### Drawings

Exemplary embodiments of the invention are described with reference to the accompanying drawings, which show in:
- Fig. 1: known bitrate control for an MPEG-2 video or audio encoder supplying its output data to a DVD-RAM device;
- Fig. 2: improved bitrate control for a system according to Fig. 1.

### Exemplary embodiments

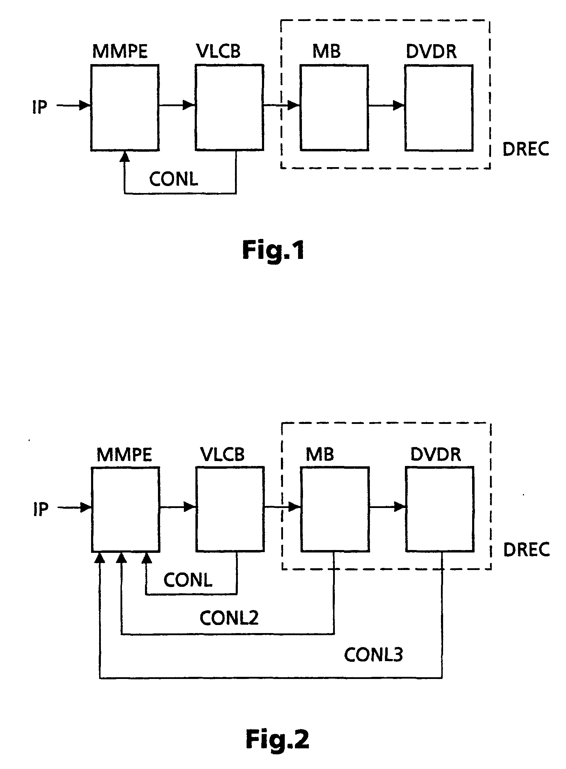

In Fig. 1 an input video signal IP supplied to an MPEG-2 video encoder including a main MPEG encoder block MMPE and a VLC encoder with a VLC buffer VLCB. A filling or content level signal CONL is derived from the current filling level of VLCB and is fed to MMPE in order to control the characteristic of its quantiser and inverse quantiser. MMPE includes in a well-known loop a subtracting combiner, a DCT transformer, a quantiser, an inverse quantiser, an inverse DCT transformer and a picture block values predictor. The predicted and correspondingly motion compensated pixel block values are fed to the subtracting input of said combiner. In case of intraframe or intrafield encoding the combiner outputs the original input signal pixel block values to said DCT transformer. In case of interframe or interfield, i.e. predictive encoding the combiner outputs to said DCT transformer the pixel block difference values between original input signal pixel block values and corresponding reconstructed predicted and motion compensated pixel block values. The output signal of the quantiser is fed to VLCB.
The MPEG encoded video signal is stored on a DVD-RAM disc DVDR that is inserted into a DVD data recorder DREC. This recorder includes a buffer called mechanical buffer MB which receives the MPEG encoded input signal and outputs data to DVDR when a data item is ready for recording.

The inventive system depicted in Fig. 2 includes stages and/or steps corresponding to that of Fig. 1. However, the quantiser and/or VLC encoder and/or prediction characteristics or settings are additionally controlled by a second filling or content level signal CONL2 and/or a third filling or content level signal CONL3. CONL2 is derived from the current filling level of MB. CONL3 is derived from the current filling level of the storage medium DVDR.
The inventive bitrate control uses at least the following features:
a) Overflow and underflow of the mechanical buffer MB is avoided;
b) E.g. digital TV data streams include information like EPG (electronic program guide) data from which, based on the initial or currently remaining program length and the desired average data rate, and based on the initial or currently remaining storage capacity for this program on the DVD-RAM disc, the encoding parameters can be adapted accordingly. In particular a situation is avoided where the last part of an input sequence or program cannot be stored on the disc due to a 'disc area full' situation. A corresponding encoder/recorder system can operate in a studio or can be operated by a consumer if the program length data has been inserted into the data stream manually or automatically, or a digital TV receiver or set-top-box receives and decodes a datastream with EPG data which is then re-encoded before storage.
   In case anolog TV signals are encoded and stored, the information about the length of the program can be taken from the VPS data (video programming system standard).

Advantageously the invention, when implemented as a video or audio encoder + DVD recorder system, does not require additional costly hardware because use of a mechanical buffer is mandatory for a DVD front-end. The remaining disc or disc area capacity is monitored anyway in a DVD recorder. The only additional hardware is the implementation of a simple control signal channel from the DVD recorder to the video or audio encoder, conveying the signals CONL2 and CONL3.

The invention includes the feature that input buffer MB receives not only one data stream from an encoded-data buffer VLCB of a video encoder or an audio encoder, but several data streams including a data stream from an encoded-data buffer VLCB of a video encoder and a data stream from an encoded-data buffer VLCB of an audio encoder or another video encoder, or corresponding data streams from several audio encoders. In such case the signals CONL2 and/or CONL3 are fed to several corresponding encoders MMPE having corresponding encoded-data buffers VLCB. If appropriate with respect to the currently resulting encoding quality for a first one of the data streams, a current change of the filling level in a VLCB for a second one of the data streams or a current change of the filling level in MB or in DVDR caused mainly by that second one of the data streams, can also influence the encoding for the first one of the data streams using one or more of the corresponding signal CONL and the signals CONL2 and CONL3.

Instead of MPEG-2 video encoding any other kind of video encoding can be used, for example MPEG-4 or DV. In case of audio encoding, MPEG-1 or MPEG-2 or MPEG-3 including all its layers or MPEG-AAC, AC-3, MD or DTS can be used. Instead of DVD recorder and DVD-RAM disc any other kind of data recorder or storage medium can be used, e.g. DVD-RW or DVD Streamer or DV recorder with DV tape cassette.
The video or audio encoding denoted as MMPE can also be carried out using software whereby VLCB may be the standard memory assigned to a microprocessor.

## Claims

1. Method for bitrate control in a video or audio encoder (MMPE) with an encoded-data buffer (VLCB), wherein a first control signal (CONL) representing the current filling level of said encoded-data buffer is used to control the video or audio encoder output bitrate by corresponding adaptation of at least one encoding parameter used in said video or audio encoder, and wherein the encoded output video or audio data pass through said encoded-data buffer and an input buffer (MB) of a data recorder (DREC) and are thereafter stored on a storage medium (DVDR) operated in said data recorder, **characterised** in that said encoding parameter and/or further encoding parameters influencing said video or audio encoder output bitrate are additionally controlled by a second control signal (CONL2) representing the current filling level of said input buffer (MB) and/or by a third control signal (CONL3) representing a currently available storage capacity on said storage medium.

2. Method according to claim 1, wherein said video or audio encoder is an MPEG encoder, in particular MPEG-2 video.

3. Method according to claim 1 or 2, wherein said data recorder is a DVD recorder.

4. Method according to any of claims 1 to 3, wherein said video or audio encoder has in its encoding loop a quantiser and said encoding parameter is a setting or parameter for said quantiser and, if present, an inverse quantiser.

5. Method according to any of claims 1 to 4, wherein the data stream (IP) input to said video or audio encoder (MMPE) includes data - e.g. EPG data - concerning the temporal length or data concerning the amount of data for a program to be recorded, from which, based on the initial or currently remaining program length and a desired average data rate, and based on the initial or currently remaining storage capacity for this program on said storage medium (DVDR), the at least one encoding parameter is calculated accordingly using said second control signal (CONL2) and/or said third control signal (CONL3).

6. Apparatus for bitrate control, including:
- a video or audio encoder (MMPE) to which an encoded-data buffer (VLCB) is assigned;
- a data recorder (DREC) including an input buffer (MB),
wherein output video or audio data of said encoded-data buffer (VLCB) pass through said input buffer (MB) and are thereafter stored on a storage medium (DVDR) operated in said data recorder,
and wherein a first control signal (CONL) representing the current filling level of said encoded-data buffer is used to control the video or audio encoder output bitrate by corresponding adaptation of at least one encoding parameter used in said video or audio encoder, **characterised** in that said encoding parameter and/or further encoding parameters influencing said video or audio encoder output bitrate are additionally controlled by a second control signal (CONL2) representing the current filling level of said input buffer (MB) and/or by a third control signal (CONL3) representing a currently available storage capacity on said storage medium.

7. Apparatus according to claim 6, wherein said video or audio encoder is an MPEG encoder, in particular MPEG-2.

8. Apparatus according to claim 6 or 7, wherein said data recorder is a DVD recorder.

9. Apparatus according to any of claims 6 to 8, wherein said video or audio encoder has in its encoding loop a quantiser and said encoding parameter is a setting or parameter for said quantiser and, if present, an inverse quantiser.

10. Apparatus according to any of claims 6 to 9, wherein the data stream (IP) input to said video or audio encoder (MMPE) includes data - e.g. EPG data - concerning the temporal length or data concerning the amount of data for a program to be recorded, from which, based on the initial or currently remaining program length and a desired average data rate, and based on the initial or currently remaining storage capacity for this program on said storage medium (DVDR), the at least one encoding parameter is calculated accordingly using said second control signal (CONL2) and/or said third control signal (CONL3).
